(19) Europäisches Patentamt
European Patent Office
Office européen des brevets

(11) **EP 2 106 544 B1**

## (12) EUROPÄISCHE PATENTSCHRIFT

(45) Veröffentlichungstag und Bekanntmachung des Hinweises auf die Patenterteilung:
**25.02.2015 Patentblatt 2015/09**

(21) Anmeldenummer: **07848019.1**

(22) Anmeldetag: **10.12.2007**

(51) Int Cl.:
***G01N 27/407*** (2006.01)

(86) Internationale Anmeldenummer:
**PCT/EP2007/063586**

(87) Internationale Veröffentlichungsnummer:
**WO 2008/080768 (10.07.2008 Gazette 2008/28)**

(54) **SENSORELEMENT MIT OFFSETSTROM DURCH H2O-ZERSETZUNG**

SENSOR ELEMENT WITH OFFSET CURRENT BY WAY OF H2O DECOMPOSITION

ÉLÉMENT DÉTECTEUR AVEC COURANT DE DÉCALAGE PAR DÉCOMPOSITION DE H2O

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.12.2006 DE 102006062055**

(43) Veröffentlichungstag der Anmeldung:
**07.10.2009 Patentblatt 2009/41**

(73) Patentinhaber: **Robert Bosch GmbH**
**70442 Stuttgart (DE)**

(72) Erfinder:
• **REINHARDT, Goetz**
**71032 Boeblingen (DE)**
• **HETZNECKER, Alexander**
**76275 Ettlingen (DE)**
• **RUNGE, Henrico**
**70435 Stuttgart (DE)**
• **REINSHAGEN, Holger**
**96052 Bamberg (DE)**
• **DIEHL, Lothar**
**70839 Gerlingen (DE)**
• **THOMAE, Andreas**
**70435 Stuttgart (DE)**

(56) Entgegenhaltungen:
**EP-A- 0 678 740     EP-A- 1 452 861**

## Beschreibung

<u>Stand der Technik</u>

Die Erfindung geht aus von bekannten Sensorelementen, welche auf elektrolytischen Eigenschaften bestimmter Festkörper beruhen, also der Fähigkeit dieser Festkörper, bestimmte Ionen zu leiten. Derartige Sensorelemente werden insbesondere in Kraftfahrzeugen eingesetzt, um Luft-Kraftstoff-Gasgemischzusammensetzungen zu messen. Insbesondere werden Sensorelemente dieser Art in so genannten "Lambdasonden" eingesetzt und spielen eine wesentliche Rolle bei der Reduzierung von Schadstoffen in Abgasen, sowohl in Ottomotoren als auch in der Dieseltechnologie.

Mit der so genannten Luftzahl "Lambda" ($\lambda$) wird dabei allgemein in der Verbrennungstechnik das Verhältnis zwischen einer tatsächlich angebotenen Luftmasse und einer für die Verbrennung theoretisch benötigten (d. h. stöchiometrischen) Luftmasse bezeichnet. Die Luftzahl wird dabei mittels eines oder mehrerer Sensorelemente zumeist an einer oder mehreren Stellen im Abgastrakt eines Verbrennungsmotors gemessen. Entsprechend weisen "fette" Gasgemische (d. h. Gasgemische mit einem Kraftstoffüberschuss) eine Luftzahl $\lambda < 1$ auf, wohingegen "magere" Gasgemische (d. h. Gasgemische mit einem Kraftstoffunterschuss) eine Luftzahl $\lambda > 1$ aufweisen. Neben der Kraftfahrzeugtechnik werden derartige und ähnliche Sensorelemente auch in anderen Bereichen der Technik (insbesondere der Verbrennungstechnik) eingesetzt, beispielsweise in der Luftfahrttechnik oder bei der Regelung von Brennern, z. B. in Heizanlagen oder Kraftwerken. Aus dem Stand der Technik sind zahlreiche verschiedene Ausführungsformen der Sensorelemente bekannt und werden beispielsweise in Robert Bosch GmbH: "Sensoren im Kraftfahrzeug", Juni 2001, S. 112-117 oder in T. Baunach et al.: "Sauberes Abgas durch Keramiksensoren", Physik Journal 5 (2006) Nr. 5, S. 33-38, beschrieben.

Eine Ausführungsform stellt die so genannte "Sprungsonde" dar, deren Messprinzip auf der Messung einer elektrochemischen Potenzialdifferenz zwischen einer einem Referenzgas ausgesetzten Referenzelektrode und einer dem zu messenden Gasgemisch ausgesetzten Messelektrode beruht. Referenzelektrode und Messelektrode sind über den Festelektrolyten miteinander verbunden, wobei aufgrund seiner Sauerstoffionen-leitenden Eigenschaften in der Regel Zirkondioxid (z. B. Yttrium-stabilisiertes Zirkoniumdioxid) oder ähnliche Keramiken als Festelektrolyt eingesetzt werden. Theoretisch weist die Potenzialdifferenz zwischen den Elektroden gerade beim Übergang zwischen fettem Gasgemisch und magerem Gasgemisch einen charakteristischen Sprung auf, welcher genutzt werden kann, um die Gasgemischzusammensetzung zu messen und/oder zu regeln. Verschiedene Ausführungsbeispiele derartiger Sprungsonden, welche auch als "Nernst-Zellen" bezeichnet werden, sind beispielsweise in DE 10 2004 035 826 A1, DE 199 38 416 A1 und DE 10 2005 027 225 A1 beschrieben.

Alternativ oder zusätzlich zu Sprungsonden kommen auch so genannte "Pumpzellen" zum Einsatz, bei denen eine elektrische "Pumpspannung" an zwei über den Festelektrolyten verbundene Elektroden angelegt wird, wobei der "Pumpstrom" durch die Pumpzelle gemessen wird. Im Unterschied zum Prinzip der Sprungsonden stehen bei Pumpzellen in der Regel beide Elektroden mit dem zu messenden Gasgemisch in Verbindung. Dabei ist eine der beiden Elektroden (zumeist über eine durchlässige Schutzschicht) unmittelbar dem zu messenden Gasgemisch ausgesetzt. Alternativ kann diese Elektrode auch einer Luftreferenz ausgesetzt sein. Die zweite der beiden Elektroden ist jedoch in der Regel derart ausgebildet, dass das Gasgemisch nicht unmittelbar zu dieser Elektrode gelangen kann, sondern zunächst eine so genannte "Diffusionsbarriere" durchdringen muss, um in einen an diese zweite Elektrode angrenzenden Hohlraum zu gelangen. Als Diffusionsbarriere wird zumeist eine poröse keramische Struktur mit gezielt einstellbaren Porenradien verwendet. Tritt mageres Abgas durch diese Diffusionsbarriere hindurch in den Hohlraum ein, so werden mittels der Pumpspannung Sauerstoffmoleküle an der zweiten, negativen Elektrode elektrochemisch zu Sauerstoffionen reduziert, werden durch den Festelektrolyten zur ersten, positiven Elektrode transportiert und dort als freier Sauerstoff wieder abgegeben. Die Sensorelemente werden zumeist im so genannten Grenzstrombetrieb betrieben, das heißt in einem Betrieb, bei welchem die Pumpspannung derart gewählt wird, dass der durch die Diffusionsbarriere eintretende Sauerstoff vollständig zur Gegenelektrode gepumpt wird. In diesem Betrieb ist der Pumpstrom näherungsweise proportional zum Partialdruck des Sauerstoffs im Abgasgemisch, so dass derartige Sensorelemente häufig auch als Proportionalsensoren bezeichnet werden. Im Gegensatz zu Sprungsensoren lassen sich Pumpzellen über einen vergleichsweise weiten Bereich für die Luftzahl $\lambda$ einsetzen, weshalb Pumpzellen insbesondere in so genannten Breitbandsensoren zum Einsatz kommen, um auch bei Gasgemischzusammensetzungen abseits von $\lambda=1$ zu messen und/oder zu regeln.

Die oben beschriebenen Sensorprinzipien von Sprungzellen und Pumpzellen lassen sich vorteilhaft auch kombiniert einsetzen, in so genannten "Mehrzellern". So können die Sensorelemente ein oder mehrere nach dem Sprungsensor-Prinzip arbeitende Zellen und ein oder mehrere Pumpzellen enthalten. Ein Beispiel eines "Doppelzellers" ist in EP 0 678 740 B1 beschrieben. Dabei wird mittels einer Nernstzelle der Sauerstoffpartialdruck in dem oben beschriebenen, an die zweite Elektrode angrenzenden Hohlraum einer Pumpzelle gemessen und die Pumpspannung durch eine Regelung so nachgeführt, dass im Hohlraum stets die Bedingung $\lambda = 1$ herrscht. Verschiedene Abwandlungen dieses mehrzelligen Aufbaus sind bekannt.

Aus Automotive Electronics Handbook, R. K. Jurgen, Second Edition, 1999, Seite 6-9 bekannte, als einzellige Pumpzellen ausgebildete Sensorelemente mit zwei dem zu messenden Gasgemisch ausgesetzten Pumpelektroden zeigen jedoch zumeist lediglich im mageren Abgas eine eindeutige Kennlinien. Im leicht mageren Bereich, also wenn λ sich dem Wert 1 nähert, ist jedoch in vielen Fällen eine Abweichung der Pumpstrom-Kennlinie vom theoretischen Verlauf zu beobachten. Statt eines Absinkens des Pumpstroms mit kleiner werdenden Lambda-Werten hin zum Wert λ = 1 ist sogar häufig ein Anstieg des Pumpstroms zu beobachten. Diese Abweichung bewirkt, dass die Pumpstrom-Kennlinie keinen eindeutigen Verlauf mehr aufweist, aus welchem auf die Luftzahl zurück geschlossen werden kann. Dies macht sich beispielsweise bei Lambdasonde für den Einsatz in Dieselfahrzeugen, bei welchen üblicherweise im leicht mageren Bereich gearbeitet wird, negativ bemerkbar.

Eine weitere Problematik bekannter Sensorelemente besteht darin, dass verschiedene Betriebszustände existieren, welche unterschiedliche Regelpunkte, also insbesondere die Einstellung bestimmter Luftzahlen, verlangen, die in unterschiedlichen Bereichen liegen. So lassen sich beispielsweise insbesondere für den Betrieb von Dieselfahrzeugen kostengünstige Grenzstrom-Magersonilen in Form von einzellige Pumpzellen einsetzen, da Dieselfahrzeuge üblicherweise auf eine Luftzahl im mageren Bereich geregelt werden. Gleichwohl existieren insbesondere bei Dieselfahrzeugen mit Katalysatoren, Betriebszustände, in denen auf eine andere Luftzahl, insbesondere auf eine Luftzahl im leicht fetten Bereich (z.B. λ = 0,9) geregelt wird. Insbesondere sind dies Betriebszustände, in denen der Katalysator und/oder ein Filter, beispielsweise ein Partikelfilter, regeneriert wird. Da übliche einzellige Grenzstrom-Magersonden in diesem Bereich jedoch im Idealfall in diesem Bereich kein Stromsignal liefern, ist ein derartiger Wechsel des Betriebszustandes mit herkömmlichen Sensorelementen nicht oder nur schwer möglich.

Es existieren daher Ansätze, die Pumpstrom-Kennlinie gezielt in den fetten Luftzahlbereich zu verschieben oder zu "erweitern". Ein Ansatz besteht dabei darin, der Pumpkathode eine bestimmte Sauerstoffmenge aus dem Anodenraum oder einem Referenzraum zuzuführen, so dass der Punkt λ - 1 und somit der Punkt, an welchem (ausgehend vom mageren Bereich) die Pumpstrom-Kennlinie im Idealfall Null wird, in den fetten Luftzahlbereich verschoben wird. Die bekannten Ansätze unterscheiden sich im Wesentlichen durch die Art der Sauerstoffrückführung. So könnte beispielsweise einfach durch einen Verbindungskanal an der Pumpanode freiwerdender Sauerstoff zur Pumpkathode zurückgeführt werden. Dies ist jedoch mit dem Risiko verbunden, dass Brenngase vom Kathodenraum zur Pumpanode vordringen und dort die Flektrodenprozesse, insbesondere das Anodenpotenzial, beeinflussen. Ein weiterer Nachteil besteht darin, dass die rückgeführte Menge vom Sauerstoffpartialdruck im Anodenbereich abhängig ist. Ein alternativer Ansatz besteht darin, dass Sauerstoff mittels einer weiteren Pumpelektrode vom Abgas oder Anodenraum in den Kathodenraum zubeziehungsweise zurückgeführt wird. Dieser Ansatz ist jedoch mit dem Einsatz einer zusätzlichen Elektrode verbunden, was einen wesentlichen Vorteil des einfachen einzelligen Sensoraufbaus weitgehend zunichte macht. Alle bekannten Ansätze weisen zudem den Nachteil auf, dass zusätzliche bauliche Maßnahmen erforderlich sind, so dass beispielsweise vorhandene Sensorelemente (z. B. einfache einzellige Breitbandsensoren) nicht ohne Weiteres eingesetzt werden können.

Offenbarung der Ereindung

Es wird dementsprechend ein Verfahren zur Messung einer Luftzahl λ eines Gasgemischs in mindestens einem Gasraum vorgeschlagen, welches die Nachteile der aus dem Stand der Technik bekannten Verfahren weitgehend vermeidet. Vorhandene Sensorelemente können dabei weiter eingesetzt werden, da das Verfahren im Wesentlichen eine geeignete Beschaltung vorschlägt, welche auch eine Messung von Luftzahlen im fetten Luftzahlbereich ermöglicht.

Zunächst wird vorgeschlagen, um der oben beschriebenen Nicht-Eindeutigkeit der Pumpstrom-Kennlinie zu begegnen, mindestens ein Sensorelement zu verwenden, welches mindestens zwei Elektroden und mindestens einen diese mindestens zwei Elektroden verbindenden Festelektrolyten aufweist. Dabei ist die mindestens eine erste Elektrode mit Gasgemisch aus dem mindestens einen Gasraum beaufschlagbar, beispielsweise über einen Diffusionswiderstand zur Begrenzung des Grenzstromes der mindestens einen ersten Elektrode. Die mindestens eine zweite Elektrode ist hingegen nicht mit dem mindestens einen Gasraum, sondern (beispielsweise über einen Abluft- oder Referenzkanal) mit einem von dem mindestens einen Gasraum getrennten Referenzgasraum verbunden. Beispielsweise kann es sich dabei um einen Motorraum der Verbrennungskraftmaschine handeln oder auch einen separaten Referenzgasraum mit einer zumindest näherungsweise bekannten und konstanten Gasgemischzusammensetzung.

Die oben beschriebene Nicht-Eindeutigkeit der Pumpstrom-Kennlinie bei einfachen Pumpstrom-Sensorelementen (z. B. Grenzstrom-Magersonden) im Bereich leicht magerer Abgase und auch im Bereich fetter Gasgemische ist im Wesentlichen auf die an der Anode ablaufenden Reaktionen zurückzuführen. Bereits geringe Mengen an Brenngas (speziell $H_2$) beeinflussen das Messsignal, so dass die Eindeutigkeit von Kennlinien der Grenzstrom-Magersonden auch im Nichtgleichgewichtsabgas, wie es beispielsweise in der Dieseltech-nologie eingesetzt wird, schon nahe bei λ = 1,0 nicht mehr gegeben ist. Somit laufen, wenn die Anode dem Brenngas ausgesetzt ist, Reaktionen wie beispielsweise

$$CO + O^2 \rightarrow CO_2 + 2e^-$$

$$H_2 + O^{2-} \rightarrow H_2O + 2e^-$$

an der Anode ab. Durch die erfindungsgemäße Verwendung eines Sensorelements, bei welchem die mindestens eine zweite Elektrode (welche insbesondere zumindest zeitweise in der Regel als Pumpanode geschaltet wird) von dem mindestens einen Gasraum getrennt und stattdessen mit dem Referenzgasraum verbunden ist, ist diese zweite Elektrode "brenngasblind", und die oben beschriebenen Brenngasreaktionen können im Bereich dieser mindestens einen zweiten Elektrode nicht oder nur in stark vermindertem Umfang ablaufen. Die Pumpstrom-Kennlinie wird somit idealerweise eindeutig bis hinunter in den Bereich nahe $\lambda = 1$, und im fetten Luftzahlbereich wird kein Pumpstrom gemessen.

Weiterhin wird vorgeschlagen, den Messbereich des Sensorelements auch in einen Bereich $\lambda < 1$ zu erweitern. Dabei wird auf dem oben beschriebenen Konzept einer "künstlichen" Erhöhung der Sauerstoffkonzentration im Bereich der mindestens einen ersten Elektrode, welche mit dem mindestens einen Gasraum in Verbindung steht, aufgebaut. Dadurch wird, analog zur oben beschriebenen Sauerstoffrückführung aus dem Anodenbereich, die Pumpstrom-Kennlinie in den Bereich fetter Luftzahlen verschoben beziehungsweise in diesen Bereich hineinerweitert, so dass diese Pumpstrom-Kennlinie des vergleichsweise einfach aufgebauten, einzelligen Sensorelements auch in diesem erweiterten Messbereich mit $\lambda < 1$ genutzt werden kann. Alternativ ist das vorgeschlagene Verfahren jedoch auch bei komplexeren, beispielsweise mehrzelligen Sensoraufbauten einsetzbar.

Im Gegensatz zu den bekannten Verfahren wird jedoch keine "Rückführung" von Sauerstoff aus dem Anodenbereich oder aus dem Bereich des Referenzgasraums in den Bereich der mindestens einen ersten Elektrode vorgeschlagen, da dies mit den oben beschriebenen Nachteilen verbunden ist. Stattdessen wird vorgeschlagen, einen Offsetstrom und damit eine Erhöhung beziehungsweise Erweiterung der Pumpstrom-Kennlinie dadurch zu bewerkstelligen, dass im Bereich der mindestens einen ersten Elektrode gezielt eine Sauerstoff-enthaltende Komponente des Gasgemischs elektrolytisch zersetzt wird. Insbesondere kann es sich bei dieser Sauerstoff-enthaltenden Komponente um Wasser handeln, welches entweder bereits im Gasgemisch vorhanden ist und/oder welches sich durch Reaktion von Wasserstoff und Sauerstoff an der mindestens einen ersten Elektrode (welche in der Regel katalytisch, insbesondere elektrokatalytisch, aktiv ist, beispielsweise durch Einsatz von Platin als Elektrodenmaterial) bildet.

Zu dieser künstlichen Erhöhung des Sauerstoffgehalts wird vorgeschlagen, die Pumpspannung zumindest im Bereich nahe $\lambda = 1$ oder unterhalb von $\lambda = 1$ gezielt derart zu erhöhen, dass diese Pumpspannung oberhalb einer Zersetzungsspannung einer Sauerstoff-enthaltenden Komponente des Gasgemischs gewählt wird. Handelt es sich beispielsweise bei der Sauerstoffenthaltenden Komponente um Wasser, so ist es bevorzugt, wenn die erhöhte Pumpspannung oberhalb von 700 mV gewählt wird, wobei jedoch vorzugsweise die erhöhte Pumpspannung nicht größer ist als 1,2 V, beispielsweise 1,0 V. Auf diese Weise wird verhindert, dass unkontrolliert zusätzliche Zersetzungsreaktionen weiterer Komponenten des Gasgemischs ablaufen. Der Betriebszustand, in welchem mit der erhöhten Pumpspannung gearbeitet wird, wird im Folgenden als "Offset-Zustand" bezeichnet. In diesem Offset-Zustand wird der erhöhte Pumpstrom (erhöht durch den zusätzlichen, durch die Elektrolyse entstandenen Anteil an Sauerstoff) und aus dem erhöhten Pumpstrom auf die Luftzahl $\lambda$ geschlossen.

Das erfindungsgemäße Verfahren kann beispielsweise dergestalt eingesetzt werden, dass zunächst ein gewöhnlicher Magerregelungszustand vorgesehen ist, in welchem das Sensorelement im mageren Luftzahlbereich betrieben wird. Beispielsweise kann dies ein regulärer Betrieb einer Dieselkraftmaschine sein, mit Luftzahlen im Bereich zwischen $\lambda = 1,2$ und $\lambda = 1,3$. In diesem Magerregelungszustand wird eine normale Pumpspannung verwendet, welche unterhalb der Zersetzungsspannung der Sauerstoff-enthaltenden Komponente liegt, (beispielsweise für Wasser) im Bereich von 600 bis 700 mV. Dabei wird der Magerpumpstrom gemessen und daraus auf die Luftzahl $\lambda$ geschlossen, beziehungsweise diese Luftzahl $\lambda$ durch entsprechende Regelungen (beispielsweise Drosselklappen etc.) geregelt.

Daneben ist dann mindestens ein Fettregelungszustand vorgesehen, in welchem der oben beschriebene mindestens eine Offset-Zustand eingesetzt wird, also in welchem mit erhöhten Pumpspannungen oberhalb der Zersetzungsspannung gearbeitet wird, um den Pumpstrom künstlich zu erhöhen und somit die Pumpstrom-Kennlinie in den fetten Luftzahlbereich hinein zu erweitern. Beispielsweise kann dieser mindestens eine Fettregelungszustand verwendet werden, um vom Normalbetrieb mit $\lambda > 1$ einen Fettbetrieb einzustellen und dabei die Luftzahl kontrolliert herunterzufahren. Dies kann beispielsweise genutzt werden, um eine Abgasnachbehandlungsvorrichtung (beispielsweise mindestens einen Katalysator und/oder mindestens einen Filter) zu regenerieren, wobei beispielsweise Luftzahlen im Bereich von $\lambda = 0,9$ eingesetzt werden. Auf diese Weise kann, unter Einsatz des Magerregelungszustandes und des Fettregelungszustandes, auch ein einfaches, einzelliges Sensorelement ohne zusätzlichen Aufwand eingesetzt werden, um (zumindest vorübergehend) im fetten Luftzahlbereich zu regeln.

Kurze Beschreibung der Zeichnungen

Ausführungsbeispiele der Erfindung sind in den Zeichnungen dargestellt und in der nachfolgenden Beschreibung näher erläutert. Es zeigen:

Figur 1    ein erfindungsgemäßes System zur Messung einer Luftzahl $\lambda$ mit einem Sensorelement und einer elektronischen Steuervorrichtung;

Figur 2    eine Pumpstrom-Kennlinie des Sensorelements gemäß Figur 1 ohne Offset;

Figur 3    eine Pumpstrom-Kennlinie des Sensorelements gemäß Figur 1 mit Offset;

Figur 4    ein Vergleich von Pumpstrom-Kennlinien in verschiedenen Betriebsmodi;

Figur 5    eine Pumpstrom-Überhöhung als Funktion der Luftzahl $\lambda$ ;

Figur 6    eine Zersetzungskurve von Wasser; und

Figur 7    Nernst-Spannung und Pumpstrom mit Offset als Funktion der Luftzahl $\lambda$.

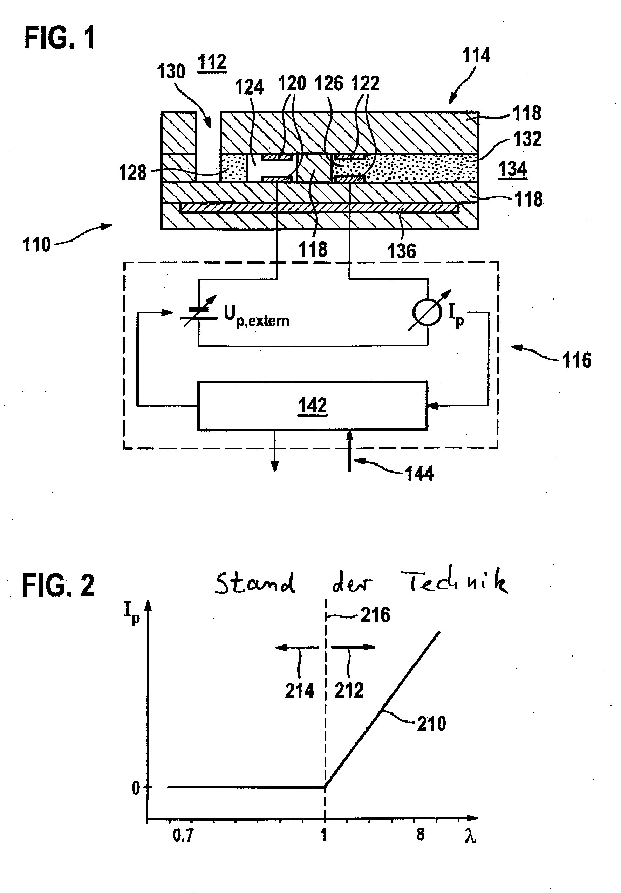

In Figur 1 ist ein erfindungsgemäßes System 110 zur Messung einer Luftzahl $\lambda$ eines Gasgemischs in einem Gasraum 112 dargestellt. Das System 110 weist ein Sensorelement 114 und eine elektronische Steuervorrichtung 116 auf. Die elektronische Steuervorrichtung 116 kann mit mehreren Sensorelementen 114 verbunden sein, beispielsweise mit Sensorelementen 114, welche vor und nach bestimmten Abgasreinigungsvorrichtungen (zum Beispiel Katalysatoren, Filter etc.) angeordnet sind. Alle Komponenten sind in Figur 1 lediglich schematisch dargestellt.

Das Sensorelement 114 weist einen Festelektrolyten 118 auf sowie eine erste Elektrode 120 und eine zweite Elektrode 122. Dabei sei im Folgenden angenommen, dass die erste Elektrode 120 zumindest zeitweise als Pumpkathode geschaltet wird, so dass diese erste Elektrode im Folgenden auch als Pumpkathode 120 bezeichnet wird. Entsprechend wird die zweite Elektrode 122 als Pumpanode bezeichnet. Es sind jedoch auch andere Beschaltungen denkbar, beispielsweise Beschaltungen mit wechselnden Polaritäten.

Die Elektroden 120, 122 sind dabei in diesem Ausführungsbeispiel als mehrteilige Elektroden ausgebildet, welche jedoch elektrisch leitend jeweils zu einzelnen Elektroden 120, 122 verbunden sind. Die Pumpkathode 120 steht dabei mit einem Kathodenhohlraum 124 in Verbindung, und die Pumpanode 122 mit einem Anodenhohlraum 126. Während jedoch der Kathodenhohlraum 124 über eine Diffusionsbarriere 128 (zum Beispiel ein poröses Material, zum Beispiel auf $Al_2O_3$- und/oder $ZrO_2$-Basis) und ein Gaszutrittsloch 130 mit dem Gasraum 112 in Verbindung steht, ist der Anodenhohlraum 126 über einen Abluftkanal 132 mit einem Referenzgasraum 134 (beispielsweise einem Motorraum eines Kraftfahrzeugs) verbunden, so dass die Pumpanode 122 vollständig gegenüber dem Gasraum 112 abgeschirmt ist. Der Anodenhohlraum 126 und der Abluftkanal 132 sind dabei mit einem porösen Element gefüllt, welches ein Abströmen von Sauerstoff aus dem Anodenhohlraum 126 in den Referenzgasraum 134 ermöglicht. Beispielsweise handelt es sich dabei wiederum um ein poröses Element auf $Al_2O_3$- und/oder $ZrO_2$-Basis.

Weiterhin weist das Sensorelement 114 ein Heizelement 136 auf, welches in einer tieferen Schichtebene des Schichtaufbaus angeordnet ist und welches dazu dient, das Sensorelement 114 auf einer (beispielsweise konstanten Betriebstemperatur von zum Beispiel 700 bis 800 °C (zum Beispiel 780 °C) zu halten. Zu diesem Zweck kann eine entsprechende Ansteuerung des Heizelements 136 vorgesehen sein, beispielsweise ausgestaltet mit einer entsprechenden Temperaturregelung, welche in Figur 1 nicht dargestellt ist. Beispielsweise erfolgt die Temperaturregelung auf einen konstanten Innenwiderstand des Sensorelements 114.

Die Elektroden 120, 122 des Sensorelements 114 sind mit der elektronischen Steuervorrichtung 116 verbunden. Die elektronische Steuervorrichtung weist eine Spannungsquelle auf, um die Pumpelektroden 120, 122 mit einer externen Pumpspannung zu beaufschlagen. Weiterhin ist eine Strommessvorrichtung 140 vorgesehen, um einen Pumpstrom $I_p$ durch das Sensorelement 114 zu messen. Die Spannungsquelle 138 und die Strommessvorrichtung werden angesteuert und ausgelesen durch eine Steuerelektronik 142, welche eingerichtet ist, um das Sensorelement 114 erfindungsgemäß zu betreiben. Zu diesem Zweck kann die Steuerelektronik 142 beispielsweise elektronische Bausteine aufweisen, welche für eine Einstellung der Pumpspannung entsprechend dem momentanen Betriebsmodus sorgen. Weiterhin kann die Steuerelektronik 142 beispielsweise Speicherelemente aufweisen, beispielsweise um gemessene Pumpströme und/oder Kennlinien und/oder weitere Parameter abzuspeichern. So kann beispielsweise die Steuerelektronik 142 einen Mikrocomputer enthalten, welcher für eine entsprechende Ansteuerung und Auslesung des Sensorelements 114 sorgt. Die Steuerelektronik 142 kann über eine Schnittstelle 144 mit weiteren Komponenten des Kraftfahrzeugs verbunden sein, um beispielsweise Regelsignale zu generieren, welche die Luftzahl $\lambda$ einstellen. So können derartige Steuer- und/oder Regelsignale beispielsweise an eine Motorsteuerung weitergegeben werden, um entsprechend eine oder mehrere Drosselklappen zu regeln, um dementsprechend die Luftzahl $\lambda$ einzustellen. Auch kann die elektronische Steuervorrichtung 116 über die Schnittstelle 144 Befehle erhalten, um zum Beispiel von einem Betriebsmodus in einen weiteren Betriebsmodus zu wechseln, beispielsweise von einem Normalbetrieb in einen Regenerationsbetrieb.

In Figur 2 ist in stark vereinfachter Darstellung eine Pumpstrom-Kennlinie 210 als Funktion der Luftzahl $\lambda$ für ein Sensorelement 114 gemäß dem Aufbau in Figur 1 dargestellt. Diese Pumpstrom-Kennlinie 210 zeigt den Effekt der Abschirmung der Pumpanode 122, wie dies in Figur 1 der Fall ist. So ist zu erkennen, dass die Pumpstrom-Kennlinie 210 im mageren Bereich 212 linear mit der Luftzahl $\lambda$ ansteigt, wohingegen die Pumpstrom-Kennlinie im fetten Bereich 214 Null ist. In der in Figur 2 idealisiert dargestellten Pumpstrom-Kennlinie 210 findet also gerade bei $\lambda = 1$ (in Figur 2 mit der Bezugsziffer 216 bezeichnet) ein Wechsel von der Steigung Null hin zu einer Steigung größer Eins statt. Bei herkömmlichen, einzelligen Sensorelementen, bei denen auch die Pumpanode 122 dem Gasraum 112 ausgesetzt ist, verläuft die Pumpstrom-Kennlinie 210 hingegen bei kleiner werdendem $\lambda$ im mageren Bereich 212 nicht eindeutig, so dass sogar in der Nähe von $\lambda = 1$ mit kleiner werdendem $\lambda$ wieder ein Anstieg der Pumpstrom-Kennlinie 210 zu verzeichnen ist. Dieser nicht eindeutige Verlauf ist auf die oben beschriebenen Fettgasreaktionen an der Pumpanode 122 zurückzuführen. Durch Abschirmung der Pumpanode 122 gegenüber dem Gasraum 112 lässt sich hingegen der in Figur 2 dargestellte Pumpstromverlauf und somit ein eindeutiger Kennlinienverlauf erzielen. Damit ist eine Regelung mittels des einfachen, einzelligen Sensorelements 114 gemäß Figur 1 auch für Luftzahlen nahe bei $\lambda = 1$ im mageren Bereich 212 möglich, was eine erhebliche Kostensenkung gegenüber üblichen, in der Regel mehrzelligen Breitband-Sensorelementen darstellt.

Der in Figur 2 gezeigte Verlauf der Pumpstrom-Kennlinie 210 wird jedoch nur beobachtet, wenn die verwendete Pumpspannung zwischen den Elektroden 120 und 122 derart gewählt wird, dass bei dieser Spannung noch keine nennenswerte Zersetzung von Wasser an der Pumpkathode 120 auftritt. Gleichzeitig wird das Sensorelement 114 jedoch üblicherweise im Grenzstrombetrieb betrieben, so dass sämtlicher an der Kathode 120 ankommender Sauerstoff durch den Festelektrolyten 118 zur Pumpanode 122 gepumpt wird. Der Pumpstrom ist also in Sättigung und ungefähr proportional zum Sauerstoffpartialdruck. Damit tritt jedoch das Dilemma auf, dass einerseits eine Pumpspannung gewählt werden muss, welche hoch genug ist, um auch bei hohen Sauerstoffkonzentrationen einen Grenzstrombetrieb zu gewährleisten, andererseits hingegen eine Pumpspannung, welche so klein gewählt werden muss, dass auch bei niedrigen Sauerstoffkonzentrationen keine nennenswerte Wasserzersetzung an der Pumpkathode 120 auftritt. Dieses Dilemma wird durch entsprechende Auswahl der Diffusionsbarriere 128 gelöst, welche den Pumpstrom begrenzt und somit eine Wahl einer moderaten Pumpspannung auch für einen Grenzstrombetrieb ermöglicht, ohne dass ein nennenswerter Anteil eines Zersetzungsstroms von Wasser gemessen wird. Übliche Pumpspannungen liegen im Bereich zwischen 600 und 700 mV.

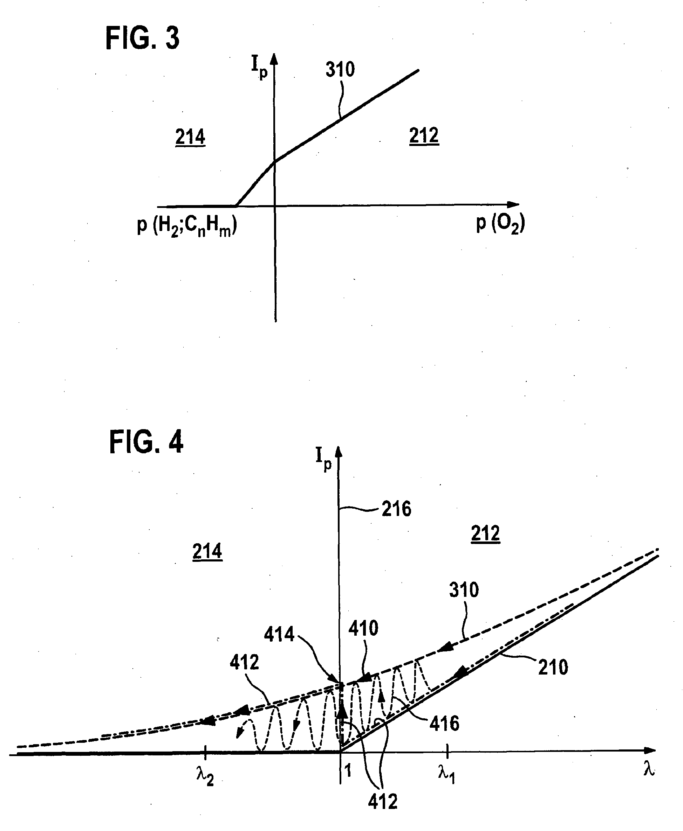

Mit der in Figur 2 gezeigten Pumpstrom-Kennlinie 210 ist jedoch eine Regelung im fetten Bereich 214 nicht möglich, da in diesem Bereich kein Pumpstrom gemessen wird. Dementsprechend wird erfindungsgemäß, wie oben beschrieben, die Sauerstoffkonzentration im Kathodenhohlraum 124 künstlich dadurch erhöht, dass in einem Offset-Zustand eine erhöhte Pumpspannung gewählt wird, welche eine messbare Zersetzung von Wasser an der Pumpkathode 120 bewirkt. In Figur 3 ist, ebenfalls wieder symbolisch und schematisch, eine Pumpstrom-Kennlinie 310 dargestellt, welche bei einer erhöhten Pumpspannung gemessen wird. Die Pumpspannung ist dabei auf über 700 bis 800 mV angehoben, beispielsweise auf 1,0 V. Hier tritt eine elektrolytische Zersetzung von Wasser an der Pumpkathode 120 auf, deren Ausmaß von verschiedenen Faktoren abhängig ist (zum Beispiel dem Sauerstoffpartialdruck im Abluftkanal 132, der Temperatur, dem Kathodenmaterial, oder dem Material der Diffusionsbarriere 128). Dabei ist die Pumpstrom-Kennlinie 310 in Figur 3 nicht als Funktion der Luftzahl $\lambda$ dargestellt, wie in Figur 2, sondern in diesem Ausführungsbeispiel als Funktion der Partialdrücke der einzelnen beteiligten Gase. So ist im mageren Bereich 212 der Pumpstrom als Funktion des Sauerstoffpartialdrucks aufgetragen, wohingegen im fetten Bereich 214 der Pumpstrom als Funktion des Brenngas-Partialdrucks (zum Beispiel Wasserstoff-Partialdruck und Kohlenwasserstoff-Partialdruck) aufgetragen ist. Die Auftragung erfolgt dabei normiert auf den Sauerstoffumsatz, so dass beispielsweise für Wasserstoff, da pro umgesetztem $H_2$-Molekül lediglich ein halbes $O_2$-Molekül bei der Wasserbildung benötigt wird, der normierte Partialdruck lediglich die Hälfte des realen Wasserstoff-Partialdruckes beträgt. Die unterschiedlichen Steigungen der Pumpstrom-Kennlinie 310 rühren von den unterschiedlichen Eigenschaften der Gase her, also beispielsweise unterschiedlichen Diffusionskoeffizienten. Unter der Annahme, dass freier Sauerstoff im fetten Bereich 214 an der Pumpkathode 120 sofort mit Brenngasen umgesetzt wird, kann der Partialdruck der Brenngase auch als "fehlender Partialdruck" des Sauerstoffs verstanden werden. Aufgrund der unterschiedlichen Molekülgrößen und Molekülmassen ergeben sich für die unterschiedlichen Gaskomponenten unterschiedliche Teil-Pumpströme. Für weitere Einzelheiten sei beispielsweise auf die bereits oben erwähnte Veröffentlichung von T. Baunach et al.: "Sauberes Abgas durch Keramiksensoren", Physik-Journal 5 (2006) Nr. 5, Seite 37, verwiesen.

Mittels der in Figur 3 dargestellten Pumpstrom-Kennlinie 310 mit Offset steht nunmehr zusätzlich zum mageren Bereich 212 auch ein gewisser Bereich im fetten Luftzahlbereich 214 zur Verfügung, innerhalb dessen ein messbarer Pumpstrom zu verzeichnen ist, und welcher beispielsweise zum Regeln der Luftzahl genutzt werden kann. Die in Figur 3 symbolisch dargestellte Kennlinie wurde experimentell mittels mehrerer Labormessungen bestätigt. Der verzeichnete Offset der Pumpstrom-Kennlinie 310 gegenüber der Pumpstrom-Kennlinie 210 gemäß Figur 2 durch erhöhte Pumpspannung ist, im Gegensatz zu den oben beschriebenen, aus dem Stand der Technik bekannten Verfahren einer Sauerstoffrückführung oder eines Sauerstoffeinpumpens in den Kathodenhohlraum 124 nicht vom Sauerstoffpartialdruck im Bereich der Pumpanode 122 abhängig. Ergänzend kann die Methode sogar verwendet werden, um einen unerwünschten, durch Fettgas an der Anode verursachten Offset nahe $\lambda = 1$ zu bestimmen und somit rechnerisch zu kompensieren. Hierzu kann die Pumpspannung unter den vorgesehenen Wert abgesenkt werden. Die hieraus ermittelte Änderung des Pumpstromes $\Delta I_p$ entspricht dem oder korreliert mit dem Offset durch die $H_2O$-Zersetzung. Im Gegensatz zum Zupumpen eines Offset-Stroms in den Kathodenhohlraum 124 wird keine weitere Elektrode im Sensorelement 114 benötigt, so dass der vergleichsweise einfache Aufbau des Sensorelements 114 beibehalten werden kann. Somit ist auch keine Designänderung des Sensorelements 114 nötig, und der erfindungsgemäße Offset-Zustand unter Zersetzung von Wasser kann durch eine entsprechende elektronische Steuervorrichtung 116 beziehungsweise eine externe Beschaltung bei nahezu jedem Sensorelement eingesetzt werden.

Im Folgenden sollen anhand der Figuren 4 bis 7 verschiedene Beispiele gezeigt werden, wie der erfindungsgemäße Offset-Zustand eingesetzt werden kann, um eine Messung und/oder Regelung einer Luftzahl $\lambda$ zu bewirken. So ist in Figur 4 zunächst wieder die Pumpstrom-Kennlinie 210 analog zu Figur 2 dargestellt, wiederum idealisiert und linearisiert, welche nach wie vor im mageren Luftzahlbereich 212 (zum Beispiel im Rahmen einer Magersonde) genutzt werden kann, um eine Luftzahl zu messen und zu regeln. Beispielsweise kann dies in einem Dieselfahrzeug eingesetzt werden, beispielsweise bei einer Luftzahl von $\lambda = 1{,}3$. So kann beispielsweise ein Magerregelungszustand vorgesehen sein, in welchem die Luftzahl auf einen Wert $\lambda_1$ gestellt wird, welcher im mageren Bereich 212 liegt. Dies kann beispielsweise der Normalbetrieb eines Dieselfahrzeugs sein.

Weiterhin ist in Figur 4 eine Pumpstrom-Kennlinie mit Offset 310 gestrichelt dargestellt, welche in ihrer Natur der Pumpstrom-Kennlinie 310 gemäß Figur 3 entspricht. Diese Pumpstrom-Kennlinie ist, wie oben beschrieben, mit einem Offset gegenüber der Pumpstrom-Kennlinie 210 versehen. Um Luftzahlen im fetten Bereich 214 messen zu können, beispielsweise eine Luftzahl mit $\lambda_2 < 1$, können verschiedene Verfahren eingesetzt werden:

### Beispiel 1: Kontinuierlich erhöhte Pumpspannung

Ist die Pumpstrom-Kennlinie 310 mit dem Offset bei erhöhter Pumpspannung bekannt (beispielsweise bei einem bestimmten Betriebszustand, zum Beispiel einer bestimmten Temperatur etc.), so kann diese unmittelbar genutzt werden, um im fetten Bereich 214 zu messen beziehungsweise zu regeln. So kann beispielsweise die Pumpstromkennlinie 310 mit Offset in einem Kalibrierschritt aufgenommen werden und beispielsweise in der Steuerelektronik 142 (beispielsweise in einem Datenspeicher, einer elektronischen Tabelle oder Ähnliches) hinterlegt werden. Auf diese Weise kann unmittelbar aus dem gemessenen Pumpstrom mit Offset auf die Luftzahl $\lambda_2$ zurückgeschlossen werden und beispielsweise ein entsprechendes Regelsignal erzeugt werden. Um beispielsweise von der Luftzahl $\lambda_1 > 1$ die Luftzahl $\lambda_2 < 1$ anzufahren (beispielsweise bei einem Wechsel vom Normalbetrieb zu einem Regenerationsbetrieb eines Katalysators), wird dann beispielsweise entlang der in Figur 4 mit der Bezugsziffer 410 bezeichneten Linie, welche im Wesentlichen der Pumpstrom-Kennlinie 310 entspricht, geregelt. Nachteilig an dieser Methode ist jedoch, dass die Steigung der Pumpstrom-Kennlinie 310 von der Abgaszusammensetzung abhängig ist (beispielsweise der $H_2O$-Konzentration), so dass diese erste Verfahrensvariante unter Umständen keine genaue Regelung ermöglicht.

### Beispiel 2: Erhöhung der Pumpspannung, bei $\lambda = 1$:

Eine zweite Möglichkeit, um gezielt Luftzahlen $\lambda_2 < 1$ einzustellen, zu messen und/oder zu regeln, ist in Figur 4 symbolisch mit der strichpunktierten Linie 412 verdeutlicht. Dabei wird, beispielsweise indem, ausgehend von $\lambda_1 > 1$, die Luftzahl kontinuierlich (oder auch in Schritten) erniedrigt wird, zunächst entlang der Pumpstrom-Kennlinie 210 ohne Offset geregelt. Bei $\lambda = 1$ (d. h. beispielsweise mit einer Toleranz von $\lambda = 1 \pm 0{,}1$ oder geringer, beispielsweise $\lambda = 1 \pm 0{,}0{,}03$) wird dann die Pumpspannung in einer oder mehreren Stufen sprunghaft erhöht, so dass aufgrund der oben beschriebenen Zersetzungseffekte der Pumpstrom $I_p$ auf seinen Offset-Wert 414 "springt". Durch dieses Umschalten der Pumpspannung zwischen einem "normalen" Wert unterhalb der Zersetzungsspannung und einem erhöhten Wert oberhalb der Zersetzungsspannung kann dieser Pumpstrom-Offset 414 somit ermittelt werden. Dieser Pumpstrom-Offset 414 ist beispielsweise charakteristisch für den weiteren Verlauf der Pumpstrom-Kennlinie 110 mit Offset im fetten Luftzahlbereich 214. Somit kann beispielsweise anhand dieses Pumpstrom-Offsets 414 aus einer Mehrzahl von hinterlegten Kalibrierkennlinien eine entsprechende Kennlinie ausgewählt werden. Diese Kalibrierkennlinie kann dann beispielsweise im weiteren Verlauf der Regelung im fetten Luftzahlbereich 214 genutzt werden, um Luftzahlen zu messen und/oder um beispielsweise auf eine bestimmte Luftzahl $\lambda_2 < 1$ zu regeln.

Dieses Regelverfahren hat sich in der Praxis als brauchbar erwiesen. Eine Problematik besteht jedoch darin, dass gegebenenfalls die Luftzahl $\lambda = 1$ nicht gezielt und genau genug angefahren werden kann oder für eine entsprechende Messung (Kalibrierung) nicht lange genug gehalten werden kann.

### Beispiel 3: Permanente Variation der Pumpspannung:

Um die beschriebenen Nachteile zu vermeiden, lässt sich eine dritte Verfahrensvariante einsetzen, bei welcher die Pumpspannung kontinuierlich zwischen zwei Werten variiert wird. Vorzugsweise wird diese Variation so durchgeführt,

dass die Wechselfrequenz zwischen den Pumpspannungen hoch ist gegenüber der Geschwindigkeit, mit welcher sich die Luftzahl beim Ansteuern eines bestimmten Lambdawertes ändert. Anstelle einer einfachen periodischen Variation lassen sich auch andere Formen der Variation einsetzen, also beispielsweise Sprungfunktionen mit unterschiedlichen Verweildauern auf den unterschiedlichen Pumpspannungwerten oder Ähnliches.

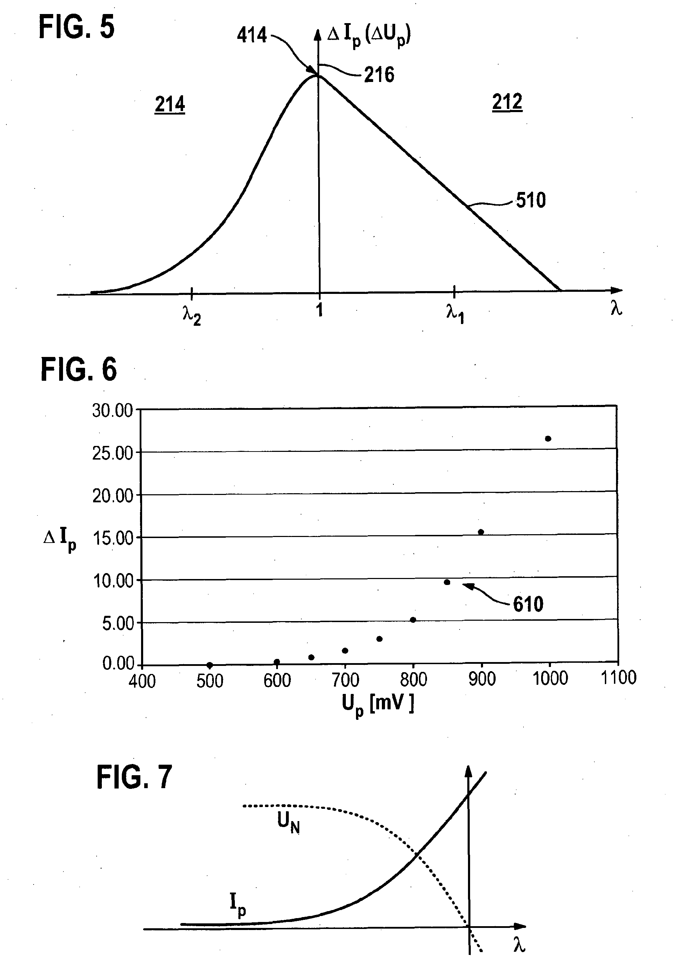

Diese Variation der Pumpspannung zwischen zwei Werten, welcher auch als "Wobbeln" bezeichnet werden kann, ist mit einer Variation des Pumpstroms verbunden, welche in Figur 4 symbolisch mit der punktierten Linie 416 bezeichnet ist. Durch diese Variation wird, beispielsweise kontinuierlich, die Differenz $\Delta I_p$ gemessen. Ein Beispiel einer derartiger Pumpstrom-Überhöhung $\Delta I_p$ für eine vorgegebene Pumpspannungs-Überhöhung $\Delta U_p$ ist symbolisch in Figur 5 als Funktion der Luftzahl $\lambda$ aufgetragen.

Dabei ist zu erkennen, dass die Pumpstromüberhöhung $\Delta I_p$ im mageren Luftzahlbereich 212 mit steigender Luftzahl $\lambda$ näherungsweise linear abfällt. Dieser lineare Abfall ist darauf zurückzuführen, dass der von außen angelegten Pumpspannung $\Delta U_{p,extern}$ nicht nur die Nernst-Spannung $U_N$ zwischen den Elektroden 120, 122 entgegenwirkt (welche durch die Partialdruckdifferenz zwischen Kathodenhohlraum 124 und Anodenhohlraum 126 bewirkt wird, siehe unter), sondern auch ein ohmscher Spannungsabfall des Ionenstroms im Festelektrolyten 118, welcher näherungsweise proportional mit dem fließenden Strom und somit (siehe die Kennlinie 210 in Figur 4) näherungsweise proportional mit der Luftzahl $\lambda$ ansteigt. Die effektive Pumpspannung $U_{p,eff}$ sinkt somit mit steigendem Strom und mit steigender Luftzahl $\lambda$ ab, so dass auch der Anteil des Zersetzungsstroms an der Pumpstrom-Kennlinie näherungsweise linear abfällt.

Bei etwa $\lambda = 1$ erreicht die Pumpstrom-Überhöhung $\Delta I_p$ ein Maximum, um anschließend mit kleiner werden dem $\lambda$ im fetten Bereich 214 wieder abzufallen. Dieser erneute Abfall liegt daran, dass in diesem Bereich der Nernstspannungs-Anteil an der effektiven Spannung ansteigt, wodurch die effektive Pumpspannung $U_{p,eff}$ abfällt, welche für eine Wasser-Zersetzung zur Verfügung steht.

Die in Figur 5 dargestellte Überhöhungs-Kennlinie 510 kann auf verschiedene Weisen zur Regelung genutzt werden. So können, analog zur oben beschriebenen Kennlinie 310, diese Überhöhungs-Kennlinien 510 beispielsweise vollständig hinterlegt werden (als Kalibrierkennlinien), um beispielsweise ein gezieltes Anfahren einer Luftzahl $\lambda_2 < 1$, ausgehend von einer Luftzahl $\lambda_1 > 1$, zu ermöglichen. Alternativ kann das beschriebene "Wobbeln" auch lediglich in der Umgebung von $\lambda = 1$ genutzt werden, um die oben beschriebene Problematik eines gezielten Anfahrens von $\lambda = 1$ zum Bestimmen des Pumpstrom-Offsets 414 zu umgehen. So kann beispielsweise im mageren Bereich 212 lediglich die Magerstrom-Kennlinie 210 genutzt werden, um die Luftzahl zu messen beziehungsweise zu regeln (Magerregelungszustand), um dann durch geeignetes "Wobbeln" im Bereich $\lambda = 1$ den Pumpstrom-Offset 414 zu bestimmen. Dieser Pumpstrom-Offset 414 kann dann beispielsweise in der elektronischen Steuervorrichtung 116 (beispielsweise in der Steuerelektronik 142 beziehungsweise einem entsprechenden Datenspeicher) hinterlegt werden und zur Kalibrierung der Kennlinie 510 dienen. Auf diese Weise kann eine der Kennlinien 510 beispielsweise durch den einen Parameter des Pumpstrom-Offsets 414 eindeutig charakterisiert werden, so dass dann aus einer gemessenen Pumpstrom-Über-höhung $\Delta I_p$ eindeutig auf eine bestimmte Luftzahl $\lambda$ zurückgeschlossen werden kann (d. h. zumindest in einem der beiden Bereiche 214, 212). Wird nun der Magerregelungszustand verlassen und wird eine Luftzahl $\lambda_2 < 1$ angesteuert (d. h. ein Bereich, in welchem die Magerstrom-Kennlinie 210 Null ist), so kann dann durch weiteres Messen der Pumpstrom-Überhöhung $\Delta I_p$, basierend auf der hinterlegten und kalibrierten Überhöhungs-Kennlinie 510 der zugehörige Lambdawert ermittelt werden.

Um von dem gemessenen Pumpstrom mit Offset (Kennlinie 310) beziehungsweise aus der Pumpstrom-Über-höhung $\Delta I_p$ (Kennlinie 510 in Figur 5) auf die Luftzahl $\lambda$ zurückzuschließen, insbesondere im mageren Bereich 214, bieten sich verschiedene Verfahren an, welche analytischer Art, empirischer Art oder semiempirischer Art sein können. Rein empirische Verfahren beruhen beispielsweise darauf, dass diese Kennlinien (beispielsweise in einem Kalibrationslabor) als Kalibrationskennlinien ausgemessen und in der elektronischen Steuervorrichtung 116 hinterlegt werden, um dementsprechend einen Rückschluss zu ermöglichen. Analytische Kennlinien beruhen auf einer vollständig analytischen Betrachtung der Vorgänge im Sensorelement 114. Semiempirische Betrachtungen beruhen auf beiden Verfahren, beispielsweise auf Verfahren, bei welchem Parameter oder Zusammenhänge teilweise gemessen werden und andere Zusammenhänge daraus analytisch abgeleitet werden, oder umgekehrt.

Zur Verdeutlichung dieses Rückschlusses auf die Luftzahl $\lambda$ sind in den Figuren 6 und 7 Beispiele verschiedene Zusammenhänge dieser Art dargestellt. So zeigt Figur 6 einen Pumpstrom-Offset 414 (d. h. $\Delta I_p$ bei $\lambda = 1$) als Funktion der von außen angelegten Pumpspannung $U_p$. Der Pumpstrom ist dabei in willkürlichen Einheiten angegeben, die Pumpspannung $U_p$ in Volt. Wird die Pumpspannung $U_p$ erhöht, so erhöht sich der Pumpstrom-Offset 414. Anschaulich gesprochen entfernen sich die beiden Kurven 210 und 310 in Figur 4 voneinander, und der oben beschriebene Offset entsteht. Diese Darstellung gemäß Figur 6 zeigt somit im Wesentlichen eine Zersetzungskennlinie 610 von Wasser als Funktion der angelegten Spannung.

Somit stellt sich die Frage, was unter der oben erwähnten "Zersetzungsspannung" des Wassers zu verstehen ist, unterhalb der die Pumpspannung im Normalbetrieb gewählt werden sollte. Grundsätzlich sollte die Pumpspannung im Normalbetrieb so gewählt werden, dass der gemessene Pumpstrom (beziehungsweise der maximale Pumpstrom-Offset, welcher aufgrund einer, wenn auch schwachen, Wasserzersetzung im Normalbetrieb auftritt) kleiner ist als 1/10, vorzugsweise kleiner als 1/20 des Grenzstroms des Sensorelements 114. Bei typischen Grenzströmen im Bereich zwischen 500 μA und 3 mA, insbesondere ca. 1,5 mA, sollte somit im Normalbetrieb die Pumpspannung derart gewählt werden, dass Pumpstrom-Offsets, welche durch Wasserzersetzung bedingt sind, von nicht mehr als 20 μA auftreten. Vorzugsweise liegen die Pumpstrom-Offsets im Bereich zwischen 5 und 20 μA oder unterhalb, vorzugsweise bei näherungsweise 5 μA. Dies wird üblicherweise erreicht, wenn Pumpspannungen von nicht mehr als 700 mV im Normalbetrieb verwendet werden.

Für die erhöhte Pumpspannung, welche in dem mindestens einen Offset-Zustand verwendet wird, wird dementsprechend ein Wert gewählt, welcher deutlich über diesen 700 mV liegt, also bei welchem bereits ein beträchtlicher, durch die Wasserzersetzung bedingter Strom fließt. Beispielsweise kann es sich dabei um Ströme handeln, welche in derselben Größenordnung liegen wie der Grenzstrom des Sensorelements 114, also im Bereich des oben beschriebenen Wertes zwischen 500 μA und 3 mA. Beispielsweise ist der Pumpstrom-Offset 414, wie aus Figur 6 ersichtlich, bei einem Wert von 1,0 V gegenüber einem Wert von 700 mV um einen Faktor 13 bis 14 überhöht. Dieser Überhöhungsfaktor hängt jedoch vom Design und der $H_2O$-Konzentration ab und liegt typischerweise zwischen 5 und 15.

Anhand der gemessenen Kennlinie der Wasserzersetzung gemäß Figur 6, welche beispielsweise wiederum in der Steuerelektronik 142 hinterlegt sein kann, kann nunmehr semiempirisch in folgender Weise für den fetten Luftzahlbereich 214 aus der gemessenen Überhöhungs-Kennlinie 510 (beziehungsweise einer bestimmten Pumpstrom-Überhöhung $\Delta I_p$) auf die Luftzahl $\lambda$ zurückgeschlossen werden. Die folgenden Betrachtungen sind dabei lediglich Näherungen. Für Luftzahlen $\lambda < 1$ entspricht die Gaszusammensetzung im Kathodenhohlraum 124 im Wesentlichen der Gasgemischzusammensetzung im Gasraum 112 (beispielsweise einem Abgas). Somit nimmt die Nernst-Spannung $U_N$ zwischen den Elektroden 120, 122, welche der von außen angelegten Pumpspannung $U_{p,extern}$ entgegenwirkt, entsprechend der Sprungsonden-Kennlinie mit abnehmendem $\lambda$ zu (wobei angenommen sei, dass der oben beschriebene ohmsche Anteil aufgrund eines Spannungsabfalls im Festelektrolyten 118 im fetten Luftzahlbereich 214 zu vernachlässigen ist). In gleichem Maße, wie sich die Nernst-Spannung $U_N$ erhöht, nimmt die effektive Pumpspannung $U_{p,eff}$ ab:

$$U_{p,eff} = U_{p,extern} - U_N .$$

Die Änderung der effektiven Pumpspannung $U_{p,extern}$ hat eine unmittelbare Auswirkung auf den Pumpstrom, entsprechend der zuvor hinterlegten beziehungsweise aufgezeichneten Kennlinie gemäß Figur 6 bei $\lambda = 1$. Es gilt also für $\lambda < 1$ der Zusammenhang:

$$I_{p, \lambda\ <1} = f(U_{p,eff}) = f(U_{p,extern}\text{-}U_N).$$

Die Funktion f ist dabei im Bereich $\lambda < 1$ eindeutig und somit umkehrbar mit einer Umkehrfunktion $f^{-1}$. Somit kann aus dem gemessenen Pumpstrom im Offset-Zustand $I_{p, \lambda <1}$ im fetten Bereich 214 nach folgender Beziehung auf die Nernst-Spannung $U_N$ und somit auf die Luftzahl $\lambda$ zurückgeschlossen werden:

$$U_N = g(\lambda) = f^{-1}(I_{p, \lambda\ <1}) - U_{p,ext} ,$$

wobei die Funktion g beispielsweise aus der Nernst-Gleichung abgeleitet werden kann. Somit kann, indem die Funktionen $f^{-1}$ als Kalibrierkennlinien hinterlegt werden, für nahezu beliebige, überhöhte externe Pumpspannungen $U_{p,ext}$ aus dem gemessenen Pumpstrom $I_{p, \lambda <1}$ im fetten Bereich 214 auf die Luftzahl zurückgeschlossen werden.

In Figur 7 ist nochmals der Zusammenhang zwischen der Nernst-Spannung $U_N$ und dem Pumpstrom $I_p$ für $\lambda < 1$ schematisch aufgetragen. Dabei ist deutlich zu erkennen, dass der Abfall des überhöhten Pumpstroms $I_{p, \lambda <1}$ für kleiner werdende Luftzahlen $\lambda$ im Wesentlichen auf dem oben beschriebenen Anstieg der Nernst-Spannung $U_N$ zurückzuführen ist.

Diese anhand der Figuren 6 und 7 beschriebenen Beispiele eines semiempirischen Rückschlusses von der gemessenen überhöhten Pumpstrom-Kennlinie im Offset-Zustand im fetten Bereich auf die Luftzahl $\lambda$ sollen lediglich als Beispiele dienen. In der Praxis können jedoch beliebige Korrelationen eingesetzt werden, um einen entsprechenden Rückschluss durchzuführen, beispielsweise angepasst an die zur Verfügung stehenden Ressourcen, wie beispielsweise Speicherkapazitäten, Rechnerkapazitäten oder Ähnliches.

**Patentansprüche**

1. Verfahren zur Messung einer Luftzahl $\lambda$ eines Gasgemischs in mindestens einem Gasraum (112) mittels mindestens eines Sensorelements (114), welches mindestens eine erste Elektrode (120), mindestens eine zweite Elektrode (122) und mindestens einen die erste und die zweite Elektroden (120, 122) verbindenden Festelektrolyten (118) aufweist, wobei die erste Elektrode (120) mit dem Gasgemisch aus dem Gasraum (112) beaufschlagbar ist und wobei die zweite Elektrode (122) mit mindestens einem von dem Gasraum (112) getrennten Referenzgasraum (134) verbunden ist, **dadurch gekennzeichnet, dass** in einem Offsetzustand das Sensorelement (114) mit einer Pumpspannung beaufschlagt wird, die größer als 700mV ist, wobei ein zwischen der ersten Elektrode (120) und der zweiten Elektrode (122) fließender Pumpstrom gemessen wird und wobei aus dem Pumpstrom auf die Luftzahl $\lambda$ geschlossen wird.

2. Verfahren gemäß dem vorhergehenden Anspruch, **dadurch gekennzeichnet, dass** ein Fettregelungszustand und ein Magerregelungszustand vorgesehen sind,

   - wobei in dem Magerregelungszustand das Sensorelement (114) im mageren Luftzahlbereich (212) betrieben wird, wobei das Sensorelement (114) mit einer Pumpspannung beaufschlagt wird, die kleiner als 700mV ist, und wobei aus einem zwischen der ersten und der zweiten Elektrode (120, 122) fließenden Magerpumpstrom auf die Luftzahl $\lambda$ geschlossen wird; und
   - wobei der Fettregelungszustand den Offsetzustand umfasst.

3. Verfahren gemäß einem der vorhergehenden Ansprüche, **dadurch gekennzeichnet, dass** das Verhältnis zwischen dem Pumpstrom und der Luftzahl $\lambda$ mittels des folgenden Verfahrens vermittelt wird:

   - mindestens eine Kalibrierkennlinie (310; 510; 610) wird empirisch, semiempirisch oder analytisch bestimmt; und
   - aus einem Vergleich zwischen dem gemessenen Pumpstrom in dem Offsetzustand mit der Kalibrierkennlinie (310; 510; 610) wird auf die Luftzahl $\lambda$ geschlossen.

4. Verfahren gemäß dem vorhergehenden Anspruch, **dadurch gekennzeichnet, dass** die Kalibrierkennlinie (310; 510; 610) in einem Datenspeicher abgelegt wird.

5. Verfahren gemäß einem der beiden vorhergehenden Ansprüche, **dadurch gekennzeichnet, dass**, ausgehend von einer Luftzahl $\lambda_1$ im mageren Bereich (212), eine Luftzahl $\lambda_2$ im fetten Bereich (214) eingestellt wird, wobei die Luftzahl $\lambda$ kontinuierlich oder schrittweise erniedrigt wird, wobei im mageren Luftzahlbereich (212) das Sensorelement (114) mit einer Pumpspannung unterhalb 700mV beaufschlagt wird und wobei bei Erreichen der Luftzahl $\lambda = 1$ der Offsetzustand eingestellt wird, wobei eine dabei eintretende Überhöhung des Pumpstromes gemessen wird und wobei entsprechend der Überhöhung des Pumpstromes bei $\lambda = 1$ eine Kalibrierkennlinic (310; 510; 610) ausgewählt wird.

6. Verfahren gemäß einem der Ansprüche 3 oder 4, **dadurch gekennzeichnet, dass**, ausgehend von einer Luftzahl $\lambda_1$ im mageren Bereich (212), eine Luftzahl $\lambda_2$ im fetten Bereich (214) eingestellt wird, wobei die Luftzahl $\lambda$ kontinuierlich oder schrittweise erniedrigt wird, wobei das Sensorelement (114) kontinuierlich in dem Offsetzustand betrieben wird und wobei entsprechend des gemessene Pumpstroms eine Kalibrierkennlinie (310; 510; 610) ausgewählt wird.

7. Verfahren gemäß einem der vorhergehenden Ansprüche, **dadurch gekennzeichnet, dass**, ausgehend von einer Luftzahl $\lambda_1$ im mageren Bereich (212), eine Luftzahl $\lambda_2$ im fetten Bereich (214) eingestellt wird, wobei die Luftzahl $\lambda$ kontinuierlich oder schrittweise erniedrigt wird, wobei der Offsetzustand abwechselnd verwendet und nicht verwendet wird, derart, dass wechselnd umgeschaltet wird zwischen einer Pumpspannung unterhalb von 700mV und einer Pumpspannung oberhalb von 70mV, wobei die Pumpstromdifferenz zwischen dem Offsetzustand und dem Normalzustand gemessen wird und wobei aus der Pumpstromdifferenz auf die Luftzahl geschlossen wird.

8. Verfahren gemäß dem vorhergehenden Anspruch, **dadurch gekennzeichnet, dass** die maximal gemessene Pumpstromdifferenz (414) registriert und abgespeichert wird.

9. Verfahren gemäß dem vorhergehenden Anspruch und gemäß einem der Ansprüche 3 oder 4, **dadurch gekennzeichnet, dass** entsprechend der maximalen gemessenen Pumpstromdifferenz (414) eine Kalibrierkennlinie (310; 510; 610) ausgewählt wird.

**10.** Verfahren gemäß einem der beiden vorhergehenden Ansprüche, **dadurch gekennzeichnet, dass** aus dem Erreichen der maximalen gemessenen Pumpstromdifferenz (414) auf das Vorliegen von $\lambda = 1$ geschlossen wird.

**11.** Verfahren gemäß einem der vorhergehenden Ansprüche, **dadurch gekennzeichnet, dass** die erhöhte Pumpspannung kleiner als 1,2 V ist.

**Claims**

**1.** Method for measuring an air/fuel ratio $\lambda$ of a gas mixture in at least one gas space (112) by means of at least one sensor element (114) which has at least a first electrode (120), at least a second electrode (122) and at least a solid electrolyte (118) connecting the first and the second electrodes (120, 122), wherein the gas mixture from the gas space (112) can be applied to the first electrode (120), and wherein the second electrode (122) is connected to at least one reference gas space (134) which is separate from the gas space (112), **characterized in that** in an offset state a pumping voltage which is higher than 700mV is applied to the sensor element (114), wherein a pumping current which flows between the first electrode (120) and the second electrode (122) is measured, and wherein the air/fuel ratio $\lambda$ is determined from the pumping current.

**2.** Method according to the preceding claim, **characterized in that** a rich control state and a lean control state are provided,

- wherein in the lean control state the sensor element (114) is operated in the lean air/fuel ratio range (212), wherein a pumping voltage which is lower than 700mV is applied to the sensor element (114), and wherein the air/fuel ratio $\lambda$ is determined from a lean pumping current flowing between the first and the second electrodes (120, 122),
and
- wherein the rich control state comprises the offset state.

**3.** Method according to one of the preceding claims, **characterized in that** the ratio between the pumping current and the air/fuel ratio $\lambda$ is determined by means of the following method:

- at least one calibration characteristic curve (310; 510; 610) is determined empirically, semi-empirically or analytically; and
- the air/fuel ratio $\lambda$ is determined from a comparison between the measured pumping current in the offset state with the calibration characteristic curve (310; 510; 610).

**4.** Method according to the preceding claim, **characterized in that** the calibration characteristic curve (310; 510; 610) is stored in a data memory.

**5.** Method according to one of the two preceding claims, **characterized in that** an air/fuel ratio $\lambda_2$ is set in the rich range (214) on the basis of an air/fuel ratio $\lambda_1$ in the lean range (212), wherein the air/fuel ratio $\lambda_2$ is lowered continuously or incrementally, wherein in the lean air/fuel ratio range (212) a pumping voltage below 700mV is applied to the sensor element (114), and wherein when the air/fuel ratio $\lambda=1$ is reached the offset state is set, wherein an overshoot in the pumping current which occurs in this context is measured, and wherein a calibration characteristic curve (310; 510; 610) is selected in accordance with the overshoot of the pumping current at $\lambda=1$.

**6.** Method according to one of Claims 3 and 4, **characterized in that** an air/fuel ratio $\lambda_2$ is set in the rich range (214) on the basis of an air/fuel ratio $\lambda_1$ in the lean range (212), wherein the air/fuel ratio $\lambda$ is lowered continuously or incrementally, wherein the sensor element (114) is operated continuously in the offset state, and wherein a calibration characteristic curve (310; 510; 610) is selected in accordance with the measured pumping current.

**7.** Method according to one of the preceding claims, **characterized in that** an air/fuel ratio $\lambda_2$ in the rich range (214) is set on the basis of an air/fuel ratio $\lambda_1$ in the lean range (212), wherein the air/fuel ratio $\lambda$ is lowered continuously or incrementally, wherein the offset state is used alternately and is not used in such a way that switching over takes place in a changing fashion between a pumping voltage below 700mV and a pumping voltage above 700mV, wherein the difference in pumping current between the offset state and the normal state is measured, and wherein the air/fuel ratio is determined from the difference in pumping current.

8. Method according to the preceding claim, **characterized in that** the maximum measured difference in the pumping current (414) is registered and stored.

9. Method according to the preceding claim and according to one of Claims 3 and 4, **characterized in that** a calibration characteristic curve (310; 510; 610) is selected in accordance with the maximum measured difference in the pumping current (414).

10. Method according to one of the two preceding claims, **characterized in that** the presence of $\lambda=1$ is determined from the reaching of the maximum measured difference in the pumping current (414).

11. Method according to one of the preceding claims, **characterized in that** the increased pumping voltage is lower than 1.2 V.

**Revendications**

1. Procédé de mesure de l'indice d'air $\lambda$ d'un mélange de gaz dans au moins un espace (112) prévu pour le gaz, au moyen d'au moins un élément de capteur (114) qui présente au moins une première électrode (120), au moins une deuxième électrode (122) et au moins un électrolyte solide (118) qui relie la première et la deuxième électrode (120, 122),
le mélange de gaz provenant de l'espace (112) pour le gaz pouvant être appliqué sur la première électrode (120) et la deuxième électrode (122) étant raccordée à un espace (134) de gaz de référence séparé de l'espace (112) pour le gaz,
**caractérisé en ce que**
dans une situation d'attente, une tension de pompage supérieure à 700 mV est appliquée sur l'élément de capteur (114) et
**en ce que** le courant de pompage qui s'écoule entre la première électrode (120) et la deuxième électrode (122) est mesuré et
**en ce qu'**une conclusion concernant l'indice d'air $\lambda$ est tirée à partir du courant de pompage.

2. Procédé selon l'une des revendications précédentes, **caractérisé en ce qu'**un état de régulation de conditions riches et un état de régulation de conditions pauvres sont prévus,
l'élément de capteur (114) étant utilisé dans la plage (212) des indices d'air pauvres dans l'état de régulation de conditions pauvres en appliquant une tension de pompage inférieure à 700 mV sur l'élément de capteur (114), une conclusion concernant l'indice d'air $\lambda$ étant tirée à partir du courant de pompage qui s'écoule en conditions pauvres entre la première et la deuxième électrode (120, 122), l'état de régulation de conditions riches comportant l'état d'attente.

3. Procédé selon l'une des revendications précédentes, **caractérisé en ce que** le rapport entre le courant de pompage et l'indice d'air $\lambda$ est déterminé au moyen du procédé suivant :

au moins une ligne caractéristique d'étalonnage (310; 510; 610) est déterminée empiriquement, semi-empiriquement ou analytiquement et
une conclusion est tirée sur l'indice d'air $\lambda$ à partir d'une comparaison entre le courant de pompage mesuré dans l'état de décalage et la ligne caractéristique d'étalonnage (310; 510; 610).

4. Procédé selon la revendication précédente, **caractérisé en ce que** la ligne caractéristique d'étalonnage (310; 510; 610) est conservée dans une mémoire de données.

5. Procédé selon l'une des deux revendications qui précèdent, **caractérisé en ce que** partant d'un indice d'air $\lambda_1$ dans la plage pauvre (212), un indice d'air $\lambda_2$ est établi dans la plage riche (214), l'indice d'air $\lambda$ étant diminué de manière continue ou par gradins, tandis que dans la plage pauvre (212), une tension de pompage inférieure à 700 mV est appliquée sur l'élément de capteur (114) et lorsque l'indice d'air $\lambda=1$ est atteint, l'état d'attente est établi, l'augmentation du courant de pompage intervenant à cette occasion étant mesurée et une ligne caractéristique d'étalonnage (310; 510; 610) étant sélectionnée en correspondance à l'augmentation du courant de pompage pour $\lambda=1$.

6. Procédé selon l'une des revendications 3 ou 4, **caractérisé en ce que** partant d'un indice d'air $\lambda_1$ dans la plage pauvre (212), un indice d'air $\lambda_2$ dans la plage riche (214) est établi, l'indice d'air $\lambda$ étant abaissé de manière continue ou par gradins et une ligne caractéristique d'étalonnage (310; l'élément de capteur (114) étant utilisé en permanence dans l'état d'attente 510; 610) étant sélectionnée en correspondance au courant de pompage mesuré.

7. Procédé selon l'une des revendications précédentes, **caractérisé en ce que** partant d'un indice d'air $\lambda_1$ de la plage pauvre (212), un indice d'air $\lambda_2$ de la plage riche (214) est établi, l'indice d'air $\lambda$ étant abaissé de manière continue ou par gradins, l'état d'attente étant utilisé et non utilisé en alternance de manière à commuter entre une tension de pompage inférieure à 700 mV et une tension de pompage supérieure à 700 mV, la différence de courant de pompage entre l'état d'attente et l'état normal étant mesurée, une conclusion étant tirée pour l'indice d'air à partir de la différence de courant de pompage.

8. Procédé selon la revendication précédente, **caractérisé en ce que** la différence de courant de pompage maximale mesurée (414) est enregistrée et conservée en mémoire.

9. Procédé selon la revendication précédente et selon l'une des revendications 3 ou 4, **caractérisé en ce qu'**une ligne caractéristique d'étalonnage (310; 510; 610) est sélectionnée en correspondance à la différence maximale mesurée des courants de pompage (414).

10. Procédé selon l'une des deux revendications qui précèdent, **caractérisé en ce que** la présence de $\lambda = 1$ est déduite à partir de l'obtention de la différence maximale mesurée des courants de pompage (414).

11. Procédé selon l'une des revendications précédentes, **caractérisé en ce que** la tension de pompage accrue est inférieure à 1,2 V.

# FIG. 1

# FIG. 2

Stand der Technik

**FIG. 3**

**FIG. 4**

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004035826 A1
- DE 19938416 A1
- DE 102005027225 A1
- EP 0678740 B1

**In der Beschreibung aufgeführte Nicht-Patentliteratur**

- **ROBERT BOSCH.** *Sensoren im Kraftfahrzeug,* Juni 2001, 112-117
- **T. BAUNACH et al.** Sauberes Abgas durch Keramiksensoren. *Physik Journal,* 2006, vol. 5, 33-38
- **R. K. JURGEN.** Automotive Electronics Handbook. 1999, 6-9
- **T. BAUNACH et al.** Sauberes Abgas durch Keramiksensoren. *Physik-Journal,* 2006, vol. 5 (5), 37